# EUROPÄISCHE PATENTSCHRIFT

(11) **EP 1 424 002 B1**
(45) Veröffentlichungstag und Bekanntmachung des Hinweises auf die Patenterteilung: **09.01.2008**
(21) Anmeldenummer: 02026524.5
(22) Anmeldetag: 27.11.2002
(51) Int. Cl.: A01G 3/053

(54) **Elektrische Hecken- oder Grasschere**
Electrical hedge trimmer or grass shear
Taille-haie ou cisaille à gazon électrique

(43) Veröffentlichungstag der Anmeldung: 02.06.2004
(73) Patentinhaber: Metabowerke GmbH, 72622 Nürtingen (DE)
(72) Erfinder: Neika, Patrick, Dipl.-Ing., 73252 Hochwang (DE); Diez, Karl, Dipl.-Ing., 73252 Lenningen (DE); Jahn, Christian, Dipl.-Ing., 72555 Metzingen (DE)
(74) Vertreter: Dreiss, Fuhlendorf, Steimle & Becker

(56) Entgegenhaltungen:
- EP-A- 0 974 434
- DE-A- 3 816 363
- US-A- 3 083 457
- US-A- 5 271 154
- US-B1- 6 263 579

## Beschreibung

Die Erfindung betrifft eine elektrische Hecken- oder Grasschere mit einer über einen Motor angetriebenen Antriebswelle, deren rotatorische Bewegung über eine Bewegungswandlungseinrichtung in eine gegenläufige Linearbewegung zum Antrieb zweier sich gegenläufig bewegender Messer umwandelbar ist, umfassend eine Messerwechseleinrichtung zur werkzeuglosen Montage und Demontage der Messer.

Derartige Hecken- und Grasscheren sind bekannt. Bezüglich der Ausgestaltung der Messer kann vorgesehen sein, dass beide Messer eine Linearbewegung durchführen in gegenläufige Richtung. Alternativ kann vorgesehen sein, dass nur ein Messer angetrieben ist und das andere Messer steht. Das sich bewegende Messer kann dann eine Bewegung mit doppeltem Hub durchführen. Auch hier vollziehen die Messer relativ zueinander eine gegenläufige Linearbewegung. Beide Varianten sollen durch die Erfindung umfasst sein.

Die Messer von Heckenscheren unterliegen beim Gebrauch einem nicht unerheblichen Verschleiß. Es ist deshalb notwendig, abgenutzte Messer nachzuschärfen bzw. durch neue Messer zu ersetzen. Hierzu müssen die Messer von der Maschine abmontiert und zerlegt werden. Bei handelsüblichen Heckenscheren muss zur Demontage der Messer das Gehäuse, in dem die Antriebseinheit, nämlich der Motor sowie die Antriebswelle und die Bewegungswandlungseinrichtung angeordnet sind, geöffnet werden. Dies darf jedoch nur durch einen Fachmann erfolgen. Bei Betrieben, die sehr viele Heckenscheren im Einsatz haben, beispielsweise städtische Ämter und Bauhöfe, werden nachgeschärfte Messer auf Lager gehalten. Sinkt dann bei einer Heckenschere die Schnittleistung unter einen vorgegebenen Wert, so wird das Maschinengehäuse mit dem Getriebe der Heckenschere geöffnet, das stumpfe Messer entfernt und neue vorbereitete oder geschliffene Messer eingebaut. Da dies nur durch einen Fachmann erfolgen kann, kann ein Messerwechsel am Einsatzort nicht erfolgen und der Messerwechsel dauert relativ lange. Es ist deshalb erforderlich, um eine reibungslose Arbeit zu gewährleisten, mehrere zusätzliche Heckenscheren mit bereits eingebauten scharfen Messern bereitzuhalten, um keine Arbeitsunterbrechung durch den Messerwechsel, wozu die Heckenscheren zumeist erst wieder in den Bauhof zurückgebracht werden müssen, zu erzeugen.

Darüber hinaus existieren im Stand der Technik kombinierte Geräte, bei denen das Motorgehäuse mit dem Drehantrieb sowohl für einen Heckenscherenvorsatz als auch für einen Grasscherenvorsatz verwendet werden kann. Derartige Geräte weisen in der Regel eine werkzeuglose Wechseleinrichtung auf.

So zeigt beispielsweise die DE 2 236 105 A1 ein elektromotorisch angetriebenes, handgeführtes Antriebsaggregat, bei dem Schneidwerkzeuge verschiedener Art durch einfache Mittel ausgetauscht werden können. Hierzu ist an der Unterseite des Motorgehäuses eine Kupplung vorgesehen, deren Gegenstück je nach gewünschtem Schneidwerkzeug ausgewechselt werden kann. Die vormontierten und zu einer Einheit zusammengefügten verschiedenen Schneidwerkzeuge können dann über Schraubverbindungen mit der Maschine verbunden werden, wobei das Kupplungsglied in einem Langloch der Messer so geführt ist, dass die Bewegung des Motors über eine Exzenterscheibe auf sie übertragen wird.

Die DE 28 40 886 A1 zeigt eine Heckenschere, die auf einfache Weise auch als Grasschere oder Rasenkantenschere nutzbar gemacht werden können soll. Es ist hierzu vorgesehen, dass ein Zusatzhandgriff einschließlich seinem Betätigungsglied mit dem Doppelexzenter, dem diesem zugeordneten Pleuel und den beiden Schermessern eine von der Antriebseinheit lösbare Baueinheit bilden. Im vorliegenden Fall ist zwar bereits ein einfacher Wechsel der verschiedenen Einheiten möglich, die Wechseleinrichtung ist jedoch nicht geeignet, aufgrund der sie umfassenden Getriebeteile eine einfache Montage und Demontage der Messer zu gewährleisten.

Eine weitere Heckenschere ist aus der US 6 263 579 B1 bekannt, bei der eine Messerwechseleinrichtung zum werkzeuglosen Wechseln der Messer vorgesehen ist.

Weiterhin ist beispielsweise aus der DE 38 16 363 A1 eine Heckenschere bekannt, die ein einfaches Auswechseln der Scherblätter ermöglicht. Dazu ist vorgesehen, dass der Exzenterantrieb für die Schermesser, die Schermesser selbst und deren Träger zusammen mit einem Flanschgehäuse eine Baugruppe verkörpern, die auswechselbar am stationären Teil der Heckenschere angebracht und mit einem Deckel versehen ist. Es ergeben sich hierdurch die bereits vorstehend genannten Nachteile. Schließlich zeigt die EP 0 974 434 A2 ein Kassettenwechselsystem, bei dem ebenfalls die Bewegungsübertragungseinrichtung in die Wechselkassette integriert ist.

Die aufgeführten Lösungen besitzen allesamt den Nachteil, dass die Bewegungswandlungseinrichtung in der Messerkassette untergebracht ist, womit zum einen das Demontieren der Messer von der Messerkassette zum Zwecke des Nachschleifens sehr aufwendig ist und zum anderen der Benutzer einer derartigen Heckenschere, sofern er verschiedene Messer verschiedener Größe und Qualitäten einsetzen will, die Bewegungswandlungseinrichtung mehrmals vorrätig hat. Dies ist unwirtschaftlich, da durch die Bewegungswandlungseinrichtung die Messerkassette verhältnismäßig teuer in der Herstellung ist.

Es ist daher Aufgabe der Erfindung, eine Messerwechseleinrichtung zu schaffen, die einen schnellen und einfachen Zugriff auf die Messer gewährleistet. Darüber hinaus ist es Aufgabe der Erfindung, eine Hecken- oder Grasschere bereitzustellen, bei der mit nur einer einzigen Antriebseinheit einfach Messer verschiedener Qualitäten und Größe eingesetzt werden können.

Die Erfindung löst diese Aufgabe, durch eine elektrische Grasoder Heckenschere bei der die Messerwechseleinrichtung eine erste messerseitige Baugruppe sowie eine zweite korrespondierende maschinenseitige Baugruppe umfasst, die miteinander lösbar verbindbar sind, wobei zumindest ein Messer an der messerseitigen Baugruppe beweglich gelagert ist und das wenigstens eine bewegliche Messer mit einem Kupplungsglied, das mit der Bewegungswandlungseinrichtung zusammenwirkt und an der maschinenseitigen Baugruppe geführt ist, bei Zusammenfügen der Baugruppe in Eingriff bringbar sind.

Bei einer erfindungsgemäßen Ausgestaltung sind die Antriebseinrichtung für die Messer und die Messer selbst voneinander getrennt und an den jeweiligen Aufnahmen der Baugruppen angeordnet. Darüber hinaus ist auch die Bewegungswandlungseinrichtung von der Antriebseinrichtung für die Messer, nämlich den Kupplungsgliedern, getrennt. Das heißt, die Bewegungswandlungseinrichtung, die die Drehwegung der Antriebswelle in eine Linearbewegung umwandelt, ist in einem Motorgehäuse oder Maschinengehäuse untergebracht. Hieran schließt sich die maschinenseitige Baugruppe an, in der die Kupplungsglieder, die die Bewegung auf die Messer übertragen, angeordnet sind. An der zweiten Baugruppe, die von der ersten Baugruppe und damit auch von der Maschine selbst gelöst werden kann, sind die Messer geführt. Durch Fügen der beiden Baugruppen werden die Messer mit den Kupplungsgliedern auf einfache Weise und einbausicher in Kontakt gebracht. D. h. die Verbindung von Messer mit Kupplungsglied findet durch das Fügen der Baugruppen statt. Die Bewegung wird dann nach Zusammenfügen der Baugruppen von den Kupplungsgliedern auf die Messer übertragen, wobei zu einer einfachen Demontage der Messer lediglich die Baugruppen getrennt werden müssen und die Messer, ohne mit den Antriebselementen verbunden zu sein aus der messerseitigen Baugruppe entnommen werden können, um beispielsweise nachgeschliffen zu werden.

Die mechanisch verhältnismäßig aufwendige Bewegungswandlungseinrichtung ist lediglich maschinenseitig vorgesehen und braucht so lediglich einmal bevorratet zu werden, auch wenn verschiedene Messer oder Scherensätze im Austausch verwandt werden sollen.

Nach einem ersten Ausführungsbeispiel kann vorgesehen sein, dass die Baugruppen je eine Gehäuseschale umfassen, die die jeweilige Baugruppe derart umschließt, dass die Gehäuseschalen sich beim Fügen der Baugruppen zu einem gesamten, die Messerwechseleinrichtung umschließenden Gehäuse zusammenfügen.

Alternativ kann auch vorgesehen sein, an einer Baugruppe ein Gehäuseteil vorzusehen, das bei Zusammenfügen der Baugruppen durch einen an der zweiten Baugruppe vorgesehenen oder separaten Deckel geschlossen wird.

Schließlich kann auch ein separates Gehäuse vorgesehen sein, das nach Fügen der Baugruppe angebracht wird.

Sofern nur ein bewegbares Messer vorgesehen ist, kann dieses fest, insbesondere einstückig, z. B. mit einem Messerträger, der Teil der Baugruppe ist, verbunden sein. Der Messerträger und das unbewegliche Messer können jedoch auch über form- und insbesondere kraftschlüssige Verbindungselemente verbunden sein. In diesem Fall reicht es aus, lediglich ein Kupplungsglied vorzusehen, das mit dem bewegbaren Messer zusammenwirkt.

Nach einem Ausführungsbeispiel kann vorgesehen sein, dass das oder die beweglichen Messer seitlich Aussparungen und die Kupplungsglieder korrespondierende Mitnahmeelemente aufweisen, die beim Zusammenfügen der Baugruppen in die Aussparungen eingreifen und die gegenläufige Linearbewegung der Kupplungsglieder auf die Messer übertragen. Es kann dabei vorgesehen sein, dass die Mitnahmeelemente über Federn, insbesondere an einer Kulissenführung, an den Kupplungsgliedern geführt und gelagert sind, so dass die Mitnahmeelemente federunterstützt ausweichen können. Damit kann beispielsweise ein Heckenscherenmesser in einer beliebigen Stellung der Messer beziehungsweise der Kupplungsglieder zueinander montiert werden. Erst beim Einschalten der Maschine nach der Montage gleiten die Mitnahmeelemente in die Aussparungen der Messer, die insbesondere am hinteren Ende der Messerklingen angeordnet sind und stellen somit eine formschlüssige Verbindung zwischen Kupplungsgliedern und Messerklingen her.

Durch diese einfache Verbindung zwischen den Kupplungsgliedern und damit der Antriebseinheit und den Messern wird eine sichere Übertragung der Linearbewegung erreicht. Es kann dabei vorgesehen sein, dass innerhalb des Motorgehäuses eine Bewegungswandlungseinrichtung vorgesehen ist, die beispielsweise eine Exzenterscheibe und zwei Pleuel umfassen kann. Am vorderen Ende, das heißt in Richtung auf die Messer einer elektrischen Hecken- oder Grasschere, schließt sich an das Motorgehäuse die Messerwechseleinrichtung, umfassend die zwei Baugruppen, an. An der maschinenseitige Baugruppe sind dabei die Kupplungsglieder geführt, die vom Motor über ein Getriebe und die Bewegungswandlungseinrichtung in eine Linearbewegung versetzt werden. Sofern die Baugruppen in zwei Gehäusehälften untergebracht sind, kann bei der Montage der messerseitigen Baugruppe mit den darin gelagerten Messern die Messerwechseleinrichtung bezüglich ihres Gehäuses vollständig geschlossen werden und die Messer werden formschlüssig mit den Kupplungsgliedern derart verbunden, dass sie ebenfalls eine oszillierende Bewegung ausführen, wenn der Motor angeschaltet ist.

Nach der Demontage können die Messer mit geringem Aufwand aus den Baugruppen ausgebaut und in die Einzelteile zerlegt werden, um die Messerklingen nachzuschleifen. Die Zerlegung ist insbesondere deshalb einfach, weil keine Zerlegung des Getriebes beziehungsweise der Bewegungswandlungseinrichtung notwendig wird. Das Getriebe sowie die Kupplungsglieder bleiben bei einer Montage oder Demontage völlig unverändert, so dass eine Demontage der Messer auch von einem Laien durchgeführt werden kann, ohne größere Risiken für die Funktionsfähigkeit.

Es kann hierbei insbesondere vorgesehen sein, dass die Baugruppen und insbesondere die Gehäuseschalen über Steckverbindungen positioniert werden, wobei die eine Baugruppe oder Gehäuseschale Ausnehmungen aufweist, und die andere Baugruppe oder Gehäuseschale mit Steckbolzen versehen ist, so dass die Baugruppen oder Gehäuseschalen formschlüssig gefügt werden können.

Des Weiteren kann vorgesehen sein, die Baugruppen insbesondere über die Gehäusehälften über eine insbesondere unverlierbare Schraubverbindung miteinander zu verbinden. Auf diese Weise können die Baugruppen oder Gehäusehälften in ihrer aufeinandergesteckten Position sicher fixiert werden. Alternativ wäre auch eine Sicherung, beispielsweise über ein Schiebeelement oder eine Clipsverbindung, denkbar.

Insbesondere wenn eine Schraubverbindung vorgesehen ist, jedoch auch bei anderen Verbindungselementen kann vorgesehen sein, die Verbindungselemente unverlierbar an einer der Baugruppe und insbesondere an einer der Gehäuseschalen anzubringen.

Schließlich kann erfindungsgemäß vorgesehen sein, dass die Baugruppen und insbesondere die Gehäuseschalen bezüglich der Messer im eingebauten Zustand seitlich zusammengefügt werden und nicht, wie im Stand der Technik bekannt, die Messerkassette von unten an die Maschine angesetzt wird. Auf diese Weise kann ein besonders einfaches Zusammenfügen und eine besonders einfache Bewegungsübertragung von den Kupplungsgliedern auf die Messer erfolgen.

Nach einem Ausführungsbeispiel ist es insbesondere vorteilhaft, dass sich die Messerwechseleinrichtung selbst synchronisiert und so der Messerwechsel weiter vereinfacht wird, da die Einbaulage der bewegbaren Messer zu den Kupplungsgliedern beim Zusammenbau nicht zu beachten ist.

Insgesamt besitzt die Erfindung folgende Vorteile:
- Der Messerwechsel kann werkzeuglos von Hand sehr schnell und einfach durchgeführt werden.
- Die Bewegungswandlungseinrichtung ist im Motorgehäuse untergebracht, wodurch das Messer samt messerseitiger Wechseleinrichtung sehr einfach aufgebaut und damit kostengünstig ist. Dies bietet insbesondere Vorteile, sofern zwei oder mehr verschiedene Messer pro Maschine verwandt werden sollen.
- Durch die einfache Demontage der Messer können die Messerwechseleinrichtungen messerseitig sehr einfach zerlegt werden, so dass ein günstiges Nachschleifen und Wechselbarkeit der Klingen durch Laien erzielt wird.

Weitere Vorteile und Merkmale der Erfindung ergeben sich aus den übrigen Unterlagen. Die einzelnen Merkmale können dabei einzeln sowie in beliebiger Kombination untereinander für die Erfindung wesentlich sein.

Die Erfindung soll im Folgenden anhand einer Zeichnung näher erläutert werden. Dabei zeigen:
- Figur 1: eine perspektivische Darstellung einer Heckenschere;
- Figur 2: einen Schnitt durch eine Messerwechseleinrichtung mit Blick auf die maschinenseitige Gehäuseschale;
- Figur 3: einen Schnitt durch eine Messerwechseleinrichtung mit einem Blick auf eine messerseitige Gehäuseschale,
- Figur 4: einen Schnitt durch die Messerwechseleinrichtung mit Blick in Richtung der Messer;
- Figur 5: einen Schnitt durch die Messerwechseleinrichtung mit Blickrichtung Messer im Bereich der Linie A-A;
- Figur 6: ein Kupplungsglied;
- Figur 7: eine Messerklinge.

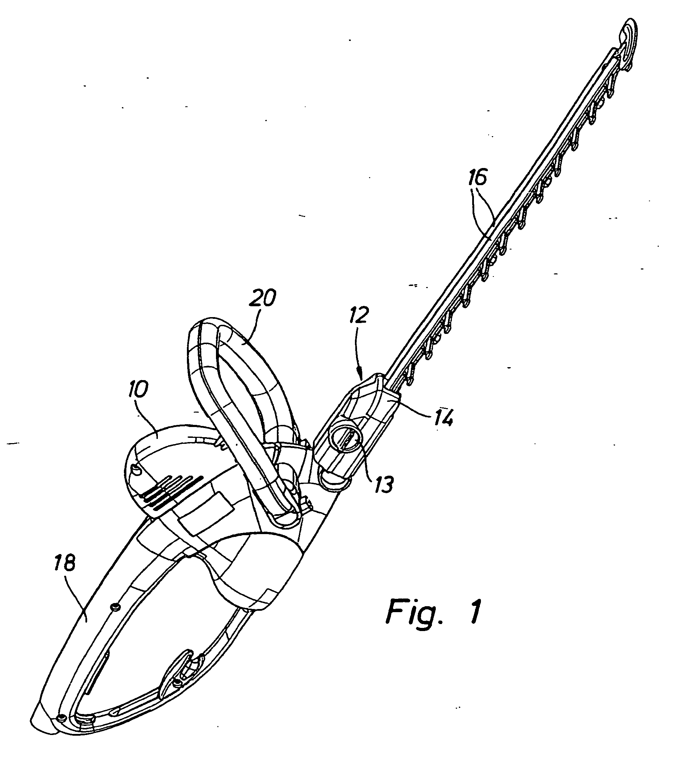

Figur 1 zeigt eine perspektivische Ansicht einer Heckenschere gemäß der Erfindung mit einem in einem Motorgehäuse 10 untergebrachten Motor. Die Leistung des Motors wird dabei über eine Antriebswelle und eine Bewegungswandlungseinrichtung, die ebenfalls im Motorgehäuse angeordnet sind, an nicht dargestellte Kupplungsglieder übertragen.

Die Kupplungsglieder erstrecken sich in eine Messerwechseleinrichtung 12 hinein, die durch ein Gehäuse 14, bestehend aus zwei Gehäuseschalen 14a und 14b umschlossen wird.

Die Messerwechseleinrichtung 12 schließt sich dabei an das Motorgehäuse 10 in Richtung der Messer 16 an, wobei hier zwei Messer vorgesehen sind, die sich oszillierend gegenläufig bewegen und so einen Schnitt durchführen können.

An dem Motorengehäuse 10 ist dabei ein erster Griff 18 angeordnet sowie ein zweiter Griff 20, über die die Heckenschere gehalten werden kann. Dabei kann vorgesehen sein, dass die Heckenschere nur dann betrieben werden kann, wenn entweder beide Hände am ersten Griff 18 oder eine Hand am ersten Griff 18 und eine Hand am zweiten Griff 20 angeordnet sind, um Verletzungen vorzubeugen.

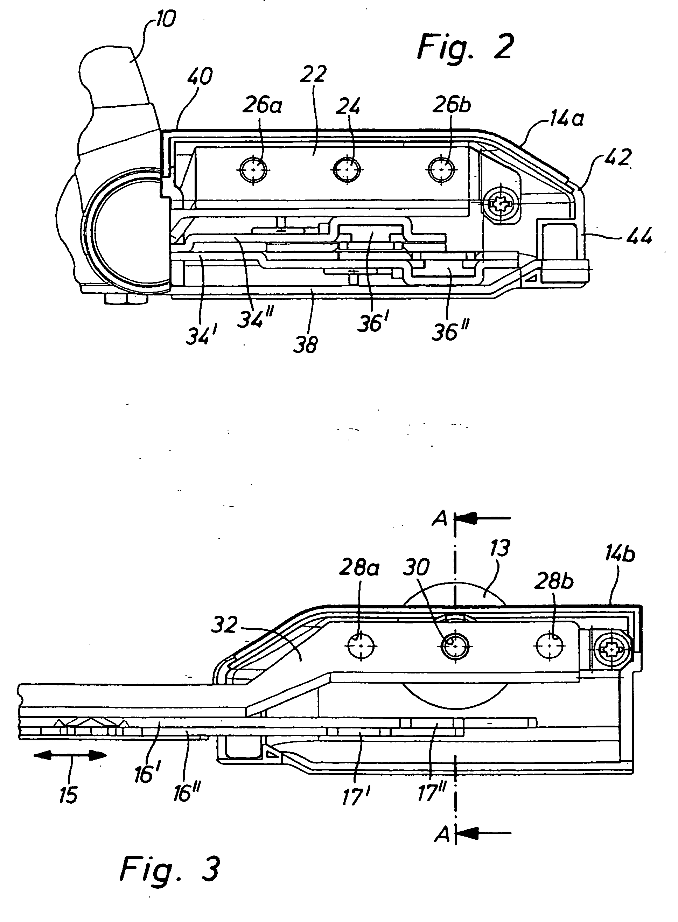

Um nun den Austausch, das heißt die Demontage der Messer insgesamt und insbesondere den vollständigen Ausbau der Messer zum Nachschleifen zu erleichtern, ist vorgesehen, dass die Messerwechseleinrichtung zwei Baugruppen umfasst, die in dem Gehäuse, bestehend aus den zwei Gehäusehälften 14a und 14b, angeordnet sind, wobei eine erste Baugruppe, mit der ersten Gehäusehälfte 14a, die maschinenseitig angeordnet, das heißt fest mit dem Maschinengehäuse verbunden ist, in Figur 2 erläutert werden soll.

Figur 2 zeigt eine Seitenansicht der maschinenseitigen Messerwechseleinrichtung (Baugruppe) mit der Gehäuseschale 14a mit Blick auf die im demontierten Zustand offene Seite. In der Gehäuseschale 14a ist ein Messerhalter 22 angeordnet, der einen Gewindestift 24 sowie zwei Zylinderstifte 26a und 26b aufweist, die zur Aufnahme und Lagesicherung in den in Figur 3 dargestellten Ausnehmungen 28a und b sowie 30 dienen, die im Messerträger 32 vorgesehen sind. Darüber hinaus ragen in die Gehäuseschale 14a Kupplungsglieder 34' und 34 " hinein, die mit der Bewegungswandlungseinrichtung verbunden sind und eine Linearbewegung ausführen, die durch die Bewegungswandlungseinrichtung aus der rotatorischen Motorbewegung erzeugt wird. Über die Kupplungsglieder 34' und 34" und die von ihnen ausgeführte hin- und hergehende Linearbewegung werden bei montierten Messern 16 diese ebenfalls in eine oszillierende Bewegung versetzt. Die Kupplungsglieder 34' und 34 " tragen hierbei sogenannte Nutensteine 36' und 36", die als Mitnahmeelemente für die Messer Verwendung finden. Die Nutensteine 36' und 36" greifen in korrespondierende Aussparungen in den Messerklingen 16 an deren maschinenseitigem Ende ein.

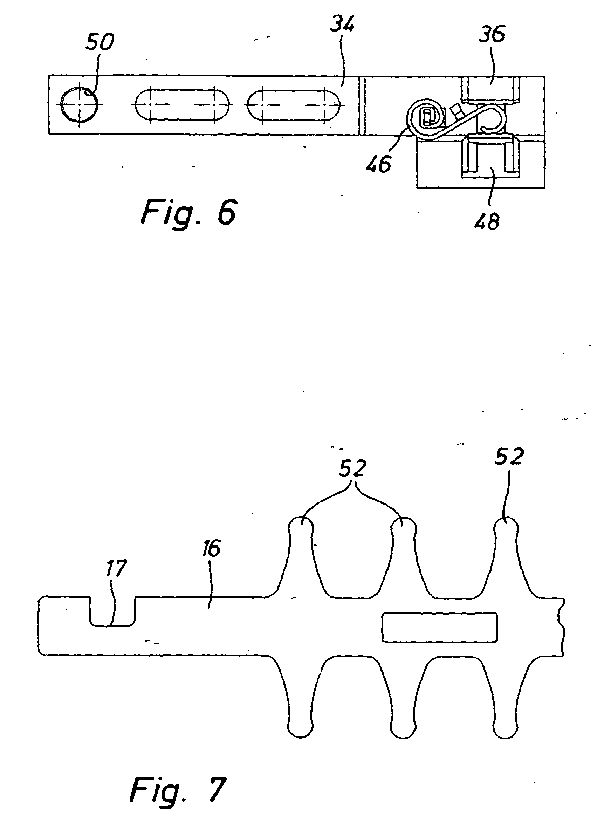

Die Nutensteine 36' und 36" sind hierbei federnd gelagert, wie in Figur 6 näher erläutert werden soll, so dass sie in einer Ebene senkrecht zur Zeichnungsebene gemäß Figur 2 ausweichen können, wenn die Gehäuseschalen 14a und 14b und damit die Baugruppen zusammengefügt werden und dabei die Aussparungen der Messerklingen nicht von vornherein mit den Nutensteinen korrespondieren. Durch dieses Ausweichen der Nutensteine 36' und 36 " nach hinten wird erreicht, dass gegebenenfalls erst beim Einschalten des Motors, wenn die Kupplungsglieder 34' und 34" sich bewegen, die Nutensteine in den Aussparungen in den Messerklingen 16 zu liegen kommen und in diese einrasten. Dies ist besonders vorteilhaft, da bei der Montage nicht darauf geachtet werden muss, in welcher Position sich die Kupplungsglieder bzw. die Messerklingen befinden, da eine Selbstsynchronisation der Messerklingen zu den Kupplungsgliedern beim Anfahren der Maschine stattfindet.

Die Kupplungsglieder 34' und 34" sind zwischen dem Messerhalter 22 und einem Stützblech 38 geführt. Die Gehäuseschale 14a ist an seinem maschinenseitigen Ende 40 einstückig mit dem Motorgehäuse 10 verbunden. Es weist an seinem in Richtung der Messerausgangsseite weisenden Ende 42 eine Öffnung 44 auf, die so gestaltet ist, dass die Messer bei zusammengesetzten Gehäusehälften 14a und 14b sich durch diese Öffnung 44 erstrecken können, jedoch nur soviel Platz um die Messer herum besteht, dass keine Gegenstände in die Messerwechseleinrichtung 12 gelangen können.

Figur 3 zeigt die messerseitige Maschinenwechseleinrichtung bzw. Baugruppe mit der Gehäuseschale 14b. Auch hier geht die Blickrichtung auf die im unmontierten Zustand offene Seite. Im Messerträger 32 sind drei Bohrungen 28a, b und 30 für die Aufnahme der Zylinderstifte 26a und b sowie des Gewindestiftes 24 zu sehen. Darüber hinaus sind an einem Messerträger 32 die Messerklingen 16' und 16" in Pfeilrichtung 15 verschieblich befestigt. Die messerseitige Messerwechseleinrichtung (Baugruppe) ist von der Gehäuseschale 14b umgeben.

Die beiden hälftigen Gehäuseschalen 14a, b können zusammengefügt werden, wobei die Zylinderstifte 26a, b sowie der Gewindestift 24 in die korrespondierenden Ausnehmungen im Messerträger 32 eingreifen, so dass die Gehäusehälften 14a, b miteinander fluchten und sicher gegen Verdrehen zueinander gesichert sind.

Im montierten Zustand bilden die beiden Gehäusehälften 14a und 14b dann ein im Wesentlichen geschlossenes Gehäuse 14, das die gesamte Messerwechseleinrichtung 12 umgibt. Die Trennungsfuge verläuft oben und unten auf der Messerwechseleinrichtung 12 sowie im Bereich der Öffnung 44 in Figur 1.

Das Fügen der beiden Gehäusehälften 14a und 14b erfolgt dabei also derart, dass diese seitlich gegeneinander gesetzt werden, in der Gebrauchsposition einer erfindungsgemäßen Heckenschere.

Zur Verbindung mit den Nutensteinen 36' und 36" weisen die Messer an ihrem im Gehäuse 14b befindlichen Ende Aussparungen 17' und 17" auf, die mit den Nutensteinen korrespondieren.

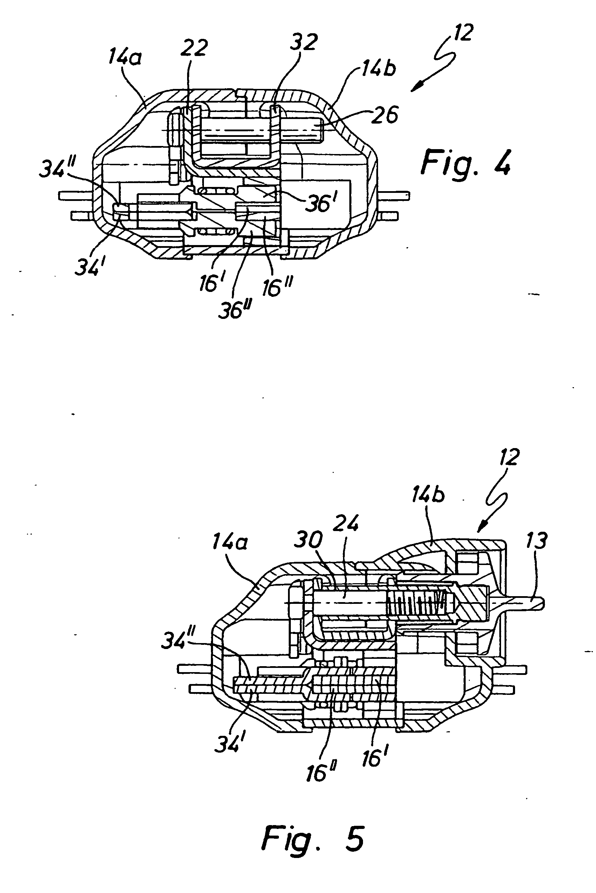

Figur 4 zeigt einen Schnitt durch die Messerwechseleinrichtung 12 im montierten Zustand mit Blick auf die Heckenscherenmesser. Der Schnitt erfolgt dabei im Bereich eines der Zylinderstifte 26, wobei hier gut ersehen werden kann, wie der Messerträger 32 auf dem einen Winkel bildenden Messerhalter 22 aufliegt und zum anderen über die Zylinderstifte 26 geführt und gegen Verdrehen gesichert ist. Die Messer 16' und 16" sind hier im Bereich der Aussparungen gezeigt, in die die Nutensteine 36' und 36 " der Kupplungsglieder 34' und 34" eingreifen.

Figur 5 zeigt nun ebenfalls einen Schnitt entlang der Linie A-A in Figur 3 durch die Messerwechseleinrichtung 12 mit Blick Richtung Heckenscherenmesser im Bereich der Befestigungsschraube 13, die in Figur 1 und Figur 3 zu sehen ist und die zur Sicherung der beiden Gehäusehälften 14a und 14b aneinander dient. Die Gehäusehälften 14a, b der Messerwechseleinrichtung sind in Figur 5 ebenfalls zusammengefügt. Die Befestigungsschraube 13 ist drehbar und begrenzt axial verschieblich im messerseitigen Gehäuseteil 14b geführt. Beim Aufschieben der messerseitigen Gehäusehälfte wird der Messerhalter 32 von Hand bis zum Anschlag auf die Bolzen 26 geschoben. Anschließend wird die Befestigungsschraube 13 auf den Gewindestift 24 vollends aufgeschraubt. Das Messer 16' und 16" kann bei der Montage zunächst nur so weit aufgeschoben werden, dass die Befestigungsschraube in Eingriff mit dem Gewindestift 24 kommt, so dass der Messerträger 32 auf den Zylinderstiften 26a, b bis zum Anschlag unter Zuhilfenahme der Befestigungsschraube bewegt werden kann.

Die Befestigungsschraube 13 ist dabei unverlierbar am Gehäuse 14b gehalten. In Figur 5 sind die Nutensteine 36 sowie die korrespondierenden Aussparungen 17 nicht zu sehen.

Figur 6 zeigt ein einzelnes Kupplungsglied 34, das mit einem Nutenstein 36 versehen ist. Der Nutenstein 36 dient zur Mitnahme der Messerklingen 16, wobei der Nutenstein 36 über eine Feder 46 derart gelagert ist, dass er zum Zwecke der Selbstsynchronisation ausweichen kann, sofern beim Zusammenfügen der Gehäuseteile 14a und 14b der Nutenstein nicht unmittelbar im Bereich einer Aussparung 17 der Messerklingen 16 zu liegen kommt. Der Nutenstein 36 ist dabei im Kupplungsglied 34 in einer Kulissenführung 48 geführt. Darüber hinaus weist das Kupplungsglied 34 eine Bohrung 50 auf, die zur Anbindung der Kupplungsglieder 34 an ein nicht dargestelltes Pleuel dient, welches die Drehbewegung des nicht dargestellten Motors in eine Linearbewegung umsetzt. Das Pleuel gehört dabei beispielsweise mit einer Exzentereinrichtung zu der Bewegungswandlungseinrichtung, die die rotatorische Motorbewegung in eine Linearbewegung überführt.

Figur 7 zeigt eine Messerklinge 16 mit den verschiedenen Zähnen 52.

In der Messerklinge 16 ist hierbei eine Aussparung 17 vorgesehen, in die im montierten Zustand der Messerwechseleinrichtung 12 die Nutensteine 36 als Mitnahmeeinrichtung eingreifen können.

Um nun nach erfolgtem Schnitt mit einer erfindungsgemäßen Heckenschere die Messer schnell wechseln bzw. nachschleifen zu können, zum einen, weil die Messer unscharf geworden sind und zum anderen, weil die Heckenschere modulartig mit verschiedenen Messersätzen betrieben werden kann, wird die Befestigungsschraube 13 gelöst, bis sie sich außerhalb des Eingriffes mit dem Gewindestift 24 befindet, so dass die Gehäusehälften 14a und 14b der Messerwechseleinrichtung 12 auseinander gezogen werden können. Die Gehäusehälfte 14a der maschinenseitigen Messerwechselvorrichtung verbleibt dabei an dem Werkzeug selber, wobei die zweite Gehäusehälfte 14b, nämlich der Teil der messerseitigen Messerwechseleinrichtung abgenommen werden kann. Sollen nun andere Messer beispielsweise anderer Qualitäten etc. verwandt werden, so kann einfach eine neue messerseitige Messerwechseleinrichtung mit bereits vormontierten Messern aufgesetzt werden auf die maschinenseitige Messerwechseleinrichtung, wobei in der zuvor beschriebenen Weise die beiden Gehäusehälften gefügt werden, und die Zylinderstifte 26a und b in die Aussparungen 28a und b eingreifen und hernach die Befestigungsschraube 13 auf den Gewindestift 24, mit dem sie fluchtet, aufgeschraubt wird. Hierbei synchronisieren sich die Kupplungsglieder 34 von selber mit den Messern in der zuvor beschriebenen Weise.

Zum Nachschärfen können die Messer 16', 16" einfach vom Messerträger 32 getrennt werden, um so ein Nachschärfen zu ermöglichen ohne Beeinträchtigung von Bewegungsübertragungselementen.

Der besondere Vorteil liegt darin, dass die Bewegungswandlungseinrichtung, die verhältnismäßig aufwendig gestaltet ist, innerhalb des Maschinengehäuses 10 untergebracht ist und in jedem Fall nur einmal vorhanden sein muss und insbesondere keine Demontage der Bewegungswandlungseinrichtung beim Ausbau der Messer notwendig wird, so dass der Messerausbau und damit auch das Nachschleifenlassen auch von Nichtfachleuten durchgeführt werden kann.

## Patentansprüche

1. Elektrische Hecken- oder Grasschere, mit einer über einen Motor angetriebenen Antriebswelle, deren rotatorische Bewegung über ein Bewegungswandlungseinrichtung in eine gegenläufige Linearbewegung zum Antrieb zweier sich gegenläufig bewegender Messer (16) umwandelbar ist, umfassend eine Messerwechseleinrichtung (12) zur werkzeuglosen Montage und Demontage der Messer (16), **dadurch gekennzeichnet, dass** die Messerwechseleinrichtung (12) eine erste messerseitige Baugruppe sowie eine zweite korrespondierende maschinenseitige Baugruppe umfasst, die miteinander lösbar verbindbar sind, wobei mindestens eines der Messer (16) an der messerseitigen Baugruppe bewegbar gelagert ist und jedes bewegbare Messer (16) mit je einem Kupplungsglied (34), das mit der Bewegungswandlungeinrichtung zusammenwirkt und an der maschinenseitigen Baugruppe geführt ist, bei Zusammenfügen der Baugruppen in Eingriff bringbar sind.

2. Elektrische Hecken- oder Grasschere nach Anspruch 1, **dadurch gekennzeichnet, dass** die Baugruppen Gehäuseschalen (14a, b) umfassen, die eine solche Form aufweisen, dass sie nach Zusammenfügen der Baugruppen die Messerwechseleinrichtung vollständig umschließen, wobei die Gehäuseschalen (14a, b) insbesondere im wesentlichen spiegelsymmetrisch aufgebaut sind.

3. Elektrische Hecken- oder Grasschere nach Anspruch 1 oder 2, wobei die beweglichen Messer (16) seitlich Aussparungen (17) und die zugehörigen Kupplungsglieder (34) korrespondierende Mitnahmeelemente (36) aufweisen, die bei zusammengefügten Baugruppen in die Aussparungen (17) eingreifen und die Linearbewegung der Kupplungsglieder (34) auf die Messer (16) übertragen.

4. Elektrische Hecken- oder Grasschere nach einem der Ansprüche 1 bis 3, wobei die Mitnahmeelemente (36) federnd verschieblich in einer insbesondere Kulissenführung (48) an den Kupplungsgliedern (34) geführt und gelagert sind, um eine Selbstsynchronisation der Messer (16) mit den Kupplungsgliedern (34) zu ermöglichen.

5. Elektrische Hecken- oder Grasschere nach einem der vorangehenden Ansprüche, wobei die Baugruppen, insbesondere über die Gehäuseschalen (14a, b) über Zylinderstifte (26) und korrespondierende Öffnungen (28) positionierbar sind.

6. - Elektrische Hecken- oder Grasschere nach einem der vorhergehenden Ansprüche, wobei die Baugruppen und insbesondere die Gehäusehälften (14a, b) über eine insbesondere unverlierbare Schraubverbindung (13, 24, 30) miteinander verbindbar sind.

7. Elektrische Hecken- oder Grasschere nach einem der vorhergehenden Ansprüche, wobei die Baugruppen insbesondere mit den Gehäuseschalen (14a, b) bezüglich der Messer (16) im eingebauten Zustand seitlich zusammengefügt werden.

8. Elektrische Hecken- oder Grasschere nach einem der vorhergehenden Ansprüche, wobei die Bewegungswandlungseinrichtung in einem Motorengehäuse der Hecken- oder Grasschere (10) angeordnet ist.

9. Elektrische Hecken- oder Grasschere nach Anspruch 7, wobei die maschinenseitige Baugruppe und/oder Gehäuseschale (14a) einstückig mit dem Motorengehäuse (10) verbunden ist.

10. Elektrische Hecken- oder Grasschere nach einem der vorangehenden Ansprüche, wobei mindestens die bewegbaren Messer (16) lösbar an einem Messerträger (32) geführt sind.

## Claims

1. Electrical hedge or grass trimmer with a motor-driven drive shaft, the rotary movement of which can be converted by way of a movement conversion device into a linear movement in the opposite direction for driving two blades (16) moving in opposite directions, comprising a blade changing device (12) for fitting and removing the blades (16) without the use of tools, **characterised in that** the blade changing device (12) comprises a first assembly at the blade end and a second corresponding assembly at the machine end which can be releasably connected to one another, at least one of the blades (16) being mounted on the blade-end assembly so as to move and, on joining the assemblies, each movable blade (16) being brought into engagement with a coupling member (34) which cooperates with the movement conversion device and is guided at the machine-end assembly,

2. Electrical hedge or grass trimmer according to claim 1, **characterised in that** the assemblies comprise housing shells (14a, b) which are shaped such that, after joining the assemblies, said shells completely surround the blade changing device, the housing shells (14a, b) being constructed substantially mirror-symmetrically.

3. Electrical hedge or grass trimmer according to either claim 1 or claim 2, wherein the moving blades (16) laterally have recesses (17) and entrainment elements (36) which correspond to the associated coupling members (34) and which, when the assemblies are joined, engage in the recesses (17) and transfer the linear movement of the coupling members (34) to the blades (16).

4. Electrical hedge or grass trimmer according to any one of claims 1 to 3, wherein the entrainment elements (36) are guided and mounted in a crank guide (48) in particular on the coupling members (34) so as to be resiliently displaceable in order to allow automatic synchronisation of the blades (16) with the coupling members (34).

5. Electrical hedge or grass trimmer according to any one of the preceding claims, wherein the assemblies may be positioned, in particular by way of the housing shells (14a, b) via parallel pins (26) and corresponding openings (28).

6. Electrical hedge or grass trimmer according to any one of the preceding claims, wherein the assemblies, and in particular the housing halves (14a, b), may be connected to one another by way of a captive screw connection (13, 24, 30) in particular.

7. Electrical hedge or grass trimmer according to any one of the preceding claims, wherein the assemblies are joined laterally, in particular with the housing shells (14a, b) in respect of the blades (16) in the installed state.

8. Electrical hedge or grass trimmer according to any one of the preceding claims, wherein the movement conversion device is arranged in an engine housing (10) of the hedge or grass trimmer.

9. Electrical hedge or grass trimmer according to claim 7, wherein the machine-end assembly and/or housing shell (14a) is integrally connected to the engine housing (10).

10. Electrical hedge or grass trimmer according to any one of the preceding claims, wherein at least the movable blades (16) are releasably guided on a blade holder (32).

## Revendications

1. Taille-haie ou cisaille à gazon électrique, comportant un arbre de transmission, qui est actionné par un moteur et dont le mouvement de rotation peut être transformé par un convertisseur de mouvement en un mouvement linéaire en sens opposé pour l'entraînement de deux lames de coupe (16) mobiles en sens opposé, comportant un dispositif de remplacement des lames de coupe (12) pour le montage et le démontage sans outil des lames de coupe (16), **caractérisé en ce que** le dispositif de remplacement des lames de coupe (12) comporte un premier module du côté des lames de coupe et un deuxième module correspondant du côté de la machine, lesquels peuvent être assemblés de manière amovible l'un à l'autre, au moins une des lames de coupe (16) étant montée de manière mobile sur le module du côté des lames de coupe et, lors de l'assemblage des modules, chaque lame de coupe (16) mobile pouvant être amenée en prise avec respectivement un organe de couplage (34), qui coopère avec le convertisseur de mouvement et est logé sur le module du côté de la machine.

2. Taille-haie ou cisaille à gazon électrique selon la revendication 1, **caractérisé en ce que** les modules comportent des coques de boîtier (14a, 14b) qui ont une forme telle que, après l'assemblage des modules, le dispositif de remplacement des lames de coupe est complètement entouré, les coques de boîtier (14a, 14b) étant conçues en particulier de manière sensiblement symétrique.

3. Taille-haie ou cisaille à gazon électrique selon la revendication 1 ou 2, dans lequel les lames de coupe (16) mobiles comportent des évidements (17) latéraux, et les organes de couplage (34) associés comportent des éléments d'entraînement (36) correspondants qui s'engagent dans les évidements (17) au moment de l'assemblage des modules, et le mouvement linéaire des organes de couplage (34) est transmis sur les lames de coupe (16).

4. Taille-haie ou cisaille à gazon électrique selon l'une quelconque des revendications 1 à 3, dans lequel les éléments d'entraînement (36) sont guidés et logés en particulier de manière flexible et mobile dans une coulisse de guidage (48) sur les organes de couplage (34), afin de permettre une auto-synchronisation des lames de coupe (16) avec les organes de couplage (34).

5. Taille-haie ou cisaille à gazon électrique selon l'une quelconque des revendications précédentes, dans lequel les modules peuvent être positionnés, en particulier au moyen des coques de boîtier (14a, 14b) par l'intermédiaire de tétons cylindriques (26) et d'orifices (28) correspondants.

6. Taille-haie ou cisaille à gazon électrique selon l'une quelconque des revendications précédentes, dans lequel les modules et en particulier les moitiés de boîtier (14a, 14b) peuvent être assemblés l'un à l'autre par l'intermédiaire d'un assemblage vissé (13, 24, 30) notamment imperdable.

7. Taille-haie ou cisaille à gazon électrique selon l'une quelconque des revendications précédentes, dans lequel les modules en particulier avec les coques de boîtier (14a, 14b) sont assemblés latéralement par rapport aux lames de coupe (16) à l'état monté.

8. Taille-haie ou cisaille à gazon électrique selon l'une quelconque des revendications précédentes, dans lequel le convertisseur de mouvement est monté dans un carter de moteur du taille-haie ou cisaille à gazon électrique (10).

9. Taille-haie ou cisaille à gazon électrique selon la revendication 7, dans lequel le module du côté de la machine et/ou la coque de boîtier (14a) est assemblé d'un seul tenant avec le carter de moteur (10).

10. Taille-haie ou cisaille à gazon électrique selon l'une quelconque des revendications précédentes, dans lequel au moins les lames de coupe (16) mobiles sont montées de manière amovible sur un porte-lames (32).
